# EUROPÄISCHE PATENTANMELDUNG

(11) **EP 1 486 520 A1**
(43) Veröffentlichungstag der Anmeldung: **15.12.2004**
(21) Anmeldenummer: 04101655.1
(22) Anmeldetag: 21.04.2004
(51) Int. Cl.: C08G 6/02

(54) **Harze auf Basis von Ketonen und Aldehyden mit verbesserten Löslichkeitseigenschaften und geringen Farbzahlen**

(30) Priorität: 14.06.2003 DE 10326893
(71) Anmelder: Degussa AG, 40474 Düsseldorf (DE)
(72) Erfinder: Glöckner, Patrick, Dr., 40885 Ratingen (DE); Burian, Bettina, 46282 Dorsten (DE); Denkinger, Peter, Dr., 48301 Nottuln (DE); Mindach, Lutz, Dr., 45770 Marl (DE); Wesselbaum, Franz-Josef, Dr., 45770 Marl (DE)

(57) **Zusammenfassung**

Es wird ein Harz auf Basis von Ketonen und Aldehyden beschrieben, welches in Methanol oder Ethanol mit einem Phasentransferkatalysator hergestellt wird. Das Harz zeichnet sich durch eine sehr breite Löslichkeit und eine geringe Eigenfärbung aus.

## Beschreibung

Die Erfindung betrifft Keton-Aldehydharze mit sehr breiten Löslichkeitseigenschaften und niedrigen Farbzahlen, ein Verfahren zu ihrer Herstellung und deren Verwendung als Hauptkomponente, Basiskomponente oder Zusatzkomponente in Überzugsmitteln, Druckfarben, Pigment- und Abtönpasten, Kugelschreiberpasten, Tinten, Polituren, Klebstoffen und Dicht- und Dämmstoffen.

Aufgabe der vorliegenden Erfindung war es, Harze mit geringer Eigenfärbung und gleichzeitig breiter Löslichkeit in unterschiedlichsten Lösemitteln und breiter Verträglichkeit zu anderen Lackrohstoffen herzustellen.

Die Aufgabe konnte überraschenderweise, wie in den Ansprüchen beschrieben, durch die Verwendung eines Phasentransferkatalysators während der Herstellung der Harze aus den unten näher beschriebenen Monomeren gelöst werden. Es werden Harze auf Basis von cycloaliphatischen Ketonen und aliphatischen und/oder aromatischen Aldehyden hergestellt.

EP 0 668 301 beschreibt die Herstellung von Keton-Aldehydharzen. Nach dem dort beschriebenen Verfahren besitzen derartige Produkte relativ hohe Farbzahlen. Die Verwendung insbesondere von Phasentransferkatalysatoren wird nicht beschrieben.

DE 33 24 287 beschreibt die Verwendung von Phasentransferkatalysatoren, jedoch zur Herstellung von Harzen aus Alkylarylketonen, deren Löslichkeitsprofil nicht an das breite Löslichkeitsprofil der erfmdungsbetreffenden Produkte reicht.

EP 0 007 106 beschreibt Polykondensationsprodukte aus aliphatischen und cyclischen Ketonen, die, hergestellt nach dem dort offenbarten Verfahren, sehr hohe Erweichungsbereiche und dadurch bedingt vergleichsweise hohe Molgewichte aufweisen. Die Harze sind nicht löslich in aliphatischen Lösemitteln. Die dort eingesetzten Phasentransferkatalysatoren haben keine aromatischen Reste.

Die erfindungsgemäßen Keton-Aldehydharze sind in praktisch allen für Beschichtungen in Frage kommenden organischen Lösemitteln, insbesondere auch Mineralölen, Testbenzinen und Aliphaten, löslich. Sie sind ebenfalls löslich in alkoholischen Lösemitteln wie Ethanol. Damit ist die Möglichkeit gegeben, geruchsarme, umweltschonende und toxikologisch unbedenkliche Beschichtungsstoffe zu formulieren.

Die erfindungsgemäßen Keton-Aldehydharze weisen eine breite Verträglichkeit mit Bindemitteln und Harzen auf. Sie sind insbesondere auch mit relativ unpolaren Typen wie Langöl-Alkydharzen, natürlichen Ölen, Kohlenwasserstoffharzen mischbar aber auch mit polaren Typen wie z.B. Polyestern, Polyamiden, Polyacrylaten, Nitrocellulose usw.

Deshalb eignen sie sich besonders als Hauptkomponente, Basiskomponente oder Zusatzkomponente in Überzugsmitteln, Druckfarben, Pigment- und Abtönpasten, Kugelschreiberpasten, Tinten, Polituren, Klebstoffen und Dicht- und Dämmstoffen.

Aus den erfindungsgemäßen Keton-Aldehydharzen lassen sich stabile Pigmentpräparationen und Abtönpasten formulieren, die aufgrund ihrer breiten Verträglichkeit in den meisten Beschichtungsstoffen einsetzbar sind und zu hervorragenden coloristischen Eigenschaften führen.

Sie sind ebenfalls einsetzbar, um z.B. Härte, Glanz, Verlauf von Beschichtungsstoffen, Druckfarben, Pigment- und Abtönpasten, Kugelschreiberpasten, Tinten, Polituren zu verbessern. Aufgrund ihres Viskositätsverhaltens können die erfindungsrelevanten Harze den Feststoffanteil von derartigen Produkten erhöhen, so dass der Anteil organischer Lösemittel reduziert werden kann.

Die erfindungsgemäßen Keton-Aldehydharze können Cyclohexanon und alle alkylsubstituierten Cyclohexanone mit einem oder mehreren Alkylresten, die insgesamt 1 bis 8 Kohlenwasserstoffatome aufweisen, einzeln oder in Mischung enthalten. Als Beispiele können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Bevorzugt werden Cyclohexanon, 4-tert.-Butylcyclohexanon und 3,3,5-Trimethylcyclohexanon.

Als aliphatische Aldehyde eignen sich prinzipiell unverzeigte oder verzweigte Aldehyde, wie z.B. Formaldehyd, Acetaldehyd, n-Butyraldehyd und/oder iso-Butyraldehyd sowie Dodecanal usw.; bevorzugt wird jedoch Formaldehyd allein oder in Mischungen eingesetzt.

Das benötigte Formaldehyd wird üblicherweise als ca. 25 bis 40 Gew.-%ige wässrige Lösung eingesetzt. Andere Einsatzformen des Formaldehyds wie z.B. auch die Verwendung als paraFormaldehyd oder Trioxan sind ebenfalls möglich. Aromatische Aldehyde, wie z.B. Benzaldehyd, können in Mischung mit Formaldehyd ebenfalls enthalten sein.

Als weitere Monomere können die erfmdungsgemäßen Keton-Aldehydharze vorrangig Ketone, allein oder in Mischung, enthalten, die aliphatischen, cycloaliphatischen, aromatischen oder gemischten Charakter besitzen. Als Beispiele seien Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon genannt. Bevorzugt sind jedoch Methylethylketon und Acetophenon. Im allgemeinen können alle in der Literatur für Ketonharzsynthesen als geeignet genannten Ketone, i.d.R. alle C-H-aciden Ketone, eingesetzt werden.

In untergeordneten Mengen können gegebenenfalls auch weitere Monomere, wie Phenole, Harnstoff und seine Derivate, als zusätzliche Monomere für die erfindungsgemäßen Keton-Aldehydharze enthalten sein.

Eine besondere Ausführungsform der Erfindung beinhaltet Mischungen von Cyclohexanonen. Besondere anwendungstechnische Bedeutung kommen Mischungen aus Trimethylcyclohexanon/Cyclohexanon, 4-tert.-Butylcyclohexanon/Trimethylcyclohexanon/Cyclohexanon und 4-tert.-Butylcyclohexanon/Trimethylcyclohexanon in molaren Mischungsverhältnissen der substituierten Cyclohexanone zu dem unsubstituierten Cyclohexanon von 0,1 zu 0,9 bis 0,9 zu 0,1, bevorzugt von 0,2 zu 0,8 bis 0,8 zu 0,2, besonders bevorzugt von 0,3 zu 0,7 bis 0,7 zu 0,3 zu.

Das Verhältnis zwischen der Ketonkomponente und der Aldehydkomponente kann variieren zwischen 1 zu 0,9 bis 1 zu 4. Bevorzugt wird jedoch ein Keton/Aldehydverhältnis von 1 zu 1 bis 1 zu 2.

Durch Variation der Mengenverhältnisse lassen sich Harzeigenschaften wie Schmelzbereich, Hydroxylzahl und Molgewicht für den Fachmann leicht einstellen. Die Umsetzung findet in einem Hilfslösemittel statt. Als geeignet haben sich Methanol oder Ethanol erwiesen. Es ist jedoch auch möglich, Hilfslösemittel zu verwenden, die sich während der Reaktion ebenfalls umsetzen lassen. Ein Beispiel hierfür ist Methylethylketon.

In der Polykondensationsmischung werden 0,01 bis 15 Massen-% - bezogen auf das Keton - eines Phasentransferkatalysators der allgemeinen Formel (A) 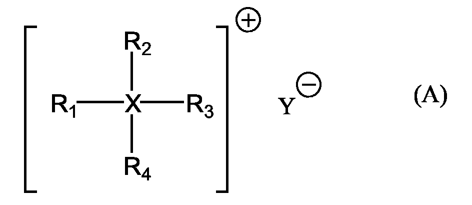 eingesetzt, wobei
- X: ein Stickstoff- oder Phosphoratom,
- R₁: einen Phenyl- oder einen Benzylrest
- R₂, R₃, R₄: gleich oder verschieden sein können und einen Alkylrest mit 1 bis 22 C-Atomen in der Kohlenstoffkette und/oder einen Phenyl- und/oder einen Benzylrest
und
- Y: das Anion einer (an)organischen Säure oder ein Hydroxidion
bedeuten.

Für den Fall quaternärer Ammoniumsalze sind Alkylreste (R₂₋₄) mit 1 bis 22 C-Atomen, insbesondere solche mit 1 bis 12 C-Atomen, in der Kohlenstoffkette und/oder Phenyl- und/oder Benzylresten und /oder Mischungen aus beiden bevorzugt. Vorzugsweise wird Benzyltributylammoniumchlorid eingesetzt. Für quaternäre Phosphoniumsalze sind für R₂₋₄ Alkylreste mit 1 bis 22 C-Atomen und/oder Phenylreste und/oder Benzylreste bevorzugt.

Als Anionen kommen solche starker (an)organischer Säuren wie z. B. Cl⁻, Br⁻, J⁻ aber auch Hydroxide, Methoxide oder Acetate in Frage.

Beispiele quaternärer Ammoniumsalze sind, Cetyldimethylbenzylammoniumchlorid, Tributylbenzylammoniumchlorid, Trimethylbenzylammoniumchlorid, Trimethylbenzylamminiumjodid, Triethylbenzylammoniumchlorid oder Triethylbenzylammoniumjodid. Als quaternäre Phosphoniumsalze kommen z.B. Triphenylbenzylphosphoniumchlorid oder Triphenylbenzylphosphoniumjodid in Frage. Es können allerdings auch Mischungen eingesetzt werden.

Der erfindungsgemäße Phasentransferkatalysator wird in Mengen von 0,01 bis 15, vorzugsweise von 0,1 bis 10,0, und insbesondere in Mengen von 0,1 bis 5,0 Massen-% - bezogen auf das eingesetzte Keton - in der Polykondensationsmischung eingesetzt.

Neben dem Phasentransferkatalysator werden stark basische Verbindungen wie Alkalihydroxide, insbesondere NaOH und/oder KOH als Katalysatoren für die Polykondensation verwendet.

Die basischen Katalysatoren werden in Mengen von > 0,1 Mol-%, vorzugsweise > 1 Mol-% und insbesondere in Mengen von > 5 Mol-% - bezogen auf das Keton - in der Reaktionsmischung eingesetzt.

Zur Harzsynthese können alle bekanten Verfahren Anwendung finden. Üblicherweise wird in Gegenwart alkalischer Katalysatoren bei Temperaturen zwischen 75 bis 95 °C kondensiert.

Solche Umsetzungen sind z.B. in Ullmann's Encyclopädie der technischen Chemie Bd. 12, Verlag Chemie Weinheim, 1976, Seiten 547 bis 555 beschrieben.

Die erfindungsrelevanten Keton-Aldehydharze besitzen je nach Verhältnis zwischen Keton und Aldehyd
- Schmelzbereiche zwischen 30 und 150 °C, bevorzugt 40 und 100 °C, besonders bevorzugt 50 und 90 °C,
- mittlere Molekulargewichte von 400 bis 2 000, besonders bevorzugt von 500 bis 1 000,
- Farbzahlen (nach Gardner, 50 % in Ethylacetat) kleiner 4, bevorzugt kleiner 2, besonders bevorzugt kleiner 1,5,
- OH-Zahlen zwischen 0 und 200 mg KOH/g, bevorzugt 0 und 150, besonders bevorzugt 0 und 100.

Die erfindungsbetreffenden Harze sind vollständig und klar löslich als 10 und 50 %ige Lösung von Ethanol und Testbenzin.

### Beispiele:

Die Erfindung wird anhand folgender Beispiele erläutert.

### Herstellung von Keton-Aldehydharze mit geringer Farbzahl:

Zunächst erfolgte die Herstellung eines Mischharzes aus Trimethylcyclohexanon und Cyclohexanon sowie Formaldehyd unter den in EP 0 668 301 beschriebenen Bedingungen in Abwesenheit eines Phasentransferkatalysators (GL 269, 270, 271, 294).

Die molaren Einsatzmengen und die Eigenschaften der erhaltenen Harze sind der Tabelle zu entnehmen. Bei dieser Fahrweise sind Farbzahlen um 4 üblich. Die weiteren Analysewerte der erhaltenen Harze dienen als Zielkenngrößen.

Ausgehend von der Standard-Fahrvorschrift wurde Methanol als Hilfslösemittel verwendet. Außerdem wurde als Phasentransferkatalysator Tributylbenzylammoniumchlorid eingesetzt.

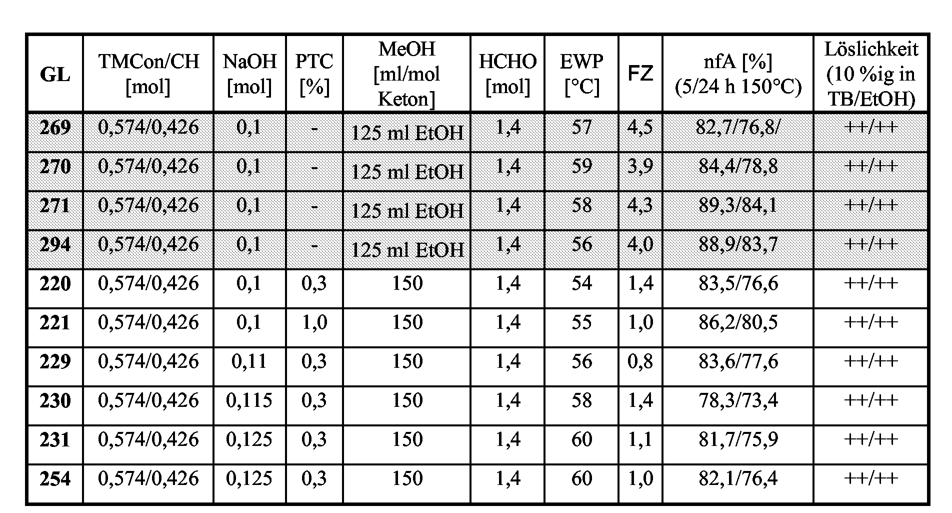

Neben der sehr viel geringeren Farbzahl des Produktes, fiel vor allem die sehr gute Phasentrennung auf, die eine Reduktion der Waschvorgänge von sieben auf fünf ermöglichte. Die sonstigen Eigenschaften wie z.B. Verträglichkeiten zu anderen Rohstoffen und Pigmentbenetzungseigenschaften der Harze hergestellt unter Verwendung eines Phasentransferkatalysators sind mit den in EP 0 668 301 beschrieben Vergleichsprodukten identisch.

### Abkürzungen

- CH: Cyclohexanon
- EtOH: Ethanol
- EWP: Erweichungspunkt (DIN 53 181)
- MeOH: Methanol
- nfA: nichtflüchtiger Anteil
- PTC: Phasentransferkatalysator
- TB: Testbenzin
- TBBACl: Tributylbenzylammoniumchlorid
- TMCon: Trimethylcyclohexanon
- FZ: Farbzahl nach Gardner (50%ig in Ethylacetat)

## Patentansprüche

1. Harze auf Basis von cycloaliphatischen Ketonen und aliphatischen und/oder aromatischen Aldehyden,
**dadurch gekennzeichnet,**
**dass** sie in Gegenwart eines Phasentransferkatalysators
der allgemeinen Formel (A) 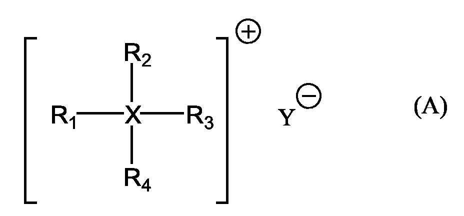 hergestellt werden, wobei
X ein Stickstoff- oder Phosphoratom,
R₁ einen Phenyl- oder einen Benzylrest
R₂, R₃, R₄ gleich oder verschieden sein können und einen Alkylrest mit 1 bis 22 C-Atomen in der Kohlenstoffkette und/oder einen Phenyl- und/oder einen Benzylrest
und
Y das Anion einer (an)organischen Säure oder ein Hydroxidion
bedeuten und die Harze löslich sind in Ethanol und Testbenzin und Farbzahlen nach Gardner unter 4 (50 % in Ethylacetat) besitzen.

2. Harze nach Anspruch 1,
**dadurch gekennzeichnet,**
**dass** der Phasentransferkatalysator in Mengen von 0,01 bis 15 Massen-% bezogen auf Keton eingesetzt wird.

3. Harze nach Anspruch 1,
**dadurch gekennzeichnet,**
**dass** der Phasentransferkatalysator in Mengen von 0,1 bis 10 Massen-% bezogen auf Keton eingesetzt wird.

4. Harze nach Anspruch 1,
**dadurch gekennzeichnet,**
**dass** der Phasentransferkatalysator in Mengen von 0,1 bis 5 Massen-% bezogen auf Keton eingesetzt wird.

5. Harze nach einem der vorherigen Ansprüche,
**dadurch gekennzeichnet,**
**dass** als Phasentransferkatalysatoren, Cetyldimethylbenzylammoniumchlorid, Tributylbenzylammoniumchlorid, Trimethylbenzylammoniumchlorid, Trimethylbenzylammoniumjodid, Triethylbenzylammoniumchlorid, Triethylbenzylammoniumjodid, Triphenylbenzylphosphoniumchlorid oder Triphenylbenzylphosphoniumjodid oder Mischungen hieraus verwendet werden.

6. Harze nach einem der vorherigen Ansprüche,
**dadurch gekennzeichnet,**
**dass** Cyclohexanon und alle alkylsubstituierten Cyclohexanone mit einem oder mehreren Alkylresten, die insgesamt 1 bis 8 Kohlenwasserstoffatome aufweisen, einzeln oder in Mischung verwendet werden.

7. Harze nach einem der vorherigen Ansprüche,
**dadurch gekennzeichnet,**
**dass** Cyclohexanon und 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon verwendet werden.

8. Harze nach einem der vorherigen Ansprüche,
**dadurch gekennzeichnet,**
**dass** Cyclohexanon, 4-tert.-Butylcyclohexanon und 3,3,5-Trimethylcyclohexanon verwendet werden.

9. Harze nach einem der vorherigen Ansprüche,
**dadurch gekennzeichnet,**
**dass** als weitere Ketone Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon verwendet werden.

10. Harze nach einem der vorherigen Ansprüche,
**dadurch gekennzeichnet,**
**dass** unverzeigte oder verzweigte Aldehyde, wie z.B. Formaldehyd, Acetaldehyd, n-Butyraldehyd und/oder iso-Butyraldehyd sowie Dodecanal und/oder Benzaldehyd eingesetzt werden.

11. Harze nach einem der vorherigen Ansprüche,
**dadurch gekennzeichnet,**
**dass** Formaldehyd allein oder in Mischungen mit anderen Aldehyden eingesetzt wird.

12. Harze nach einem der vorherigen Ansprüche,
**dadurch gekennzeichnet,**
**dass** in untergeordneten Mengen weitere Monomere, wie Phenole, Harnstoff und seine Derivate, als zusätzliche Monomere enthalten sind.

13. Harze nach einem der vorherigen Ansprüche,
**dadurch gekennzeichnet,**
**dass** ein molares Mischungsverhältnis von substituiertem Cyclohexanon zu nicht substituierten Cyclohexanon von 0,1 zu 0,9 bis 0,9 zu 0,1 eingesetzt wird.

14. Harze nach einem der vorherigen Ansprüche,
**dadurch gekennzeichnet,**
**dass** ein molares Mischungsverhältnis von substituiertem Cyclohexanon zu nicht substituierten Cyclohexanon von 0,2 zu 0,8 bis 0,8 zu 0,2 eingesetzt wird.

15. Harze nach einem der vorherigen Ansprüche,
**dadurch gekennzeichnet,**
**dass** ein molares Mischungsverhältnis von substituiertem Cyclohexanon zu nicht substituierten Cyclohexanon von 0,3 zu 0,7 bis 0,7 zu 0,3 eingesetzt wird.

16. Harze nach einem der vorherigen Ansprüche,
**dadurch gekennzeichnet,**
**dass** ein Verhältnis zwischen der Ketonkomponenten und der Aldehydkomponente zwischen 1 zu 0,9 bis 1 zu 4 verwendet wird.

17. Harze nach einem der vorherigen Ansprüche,
**dadurch gekennzeichnet,**
**dass** ein Verhältnis zwischen der Ketonkomponenten und der Aldehydkomponente zwischen 1 zu 1 bis 1 zu 2 verwendet wird.

18. Harze nach einem der vorherigen Ansprüche,
**dadurch gekennzeichnet,**
**dass** die Harze Farbzahlen nach Gardner (50 %ig in Ethylacetat) kleiner 4 besitzen.

19. Harze nach einem der vorherigen Ansprüche,
**dadurch gekennzeichnet,**
**dass** die Harze Farbzahlen nach Gardner (50 %ig in Ethylacetat) kleiner 2 besitzen.

20. Harze nach einem der vorherigen Ansprüche,
**dadurch gekennzeichnet,**
**dass** die Harze Farbzahlen nach Gardner (50 %ig in Ethylacetat) kleiner 1,5 besitzen.

21. Harze nach einem der vorherigen Ansprüche,
**dadurch gekennzeichnet,**
**dass** die Schmelzbereiche der Harze zwischen 30 und 150 °C liegen.

22. Harze nach einem der vorherigen Ansprüche,
**dadurch gekennzeichnet,**
**dass** die Schmelzbereiche der Harze zwischen 40 und 100 °C liegen.

23. Harze nach einem der vorherigen Ansprüche,
**dadurch gekennzeichnet,**
**dass** die Schmelzbereiche der Harze zwischen 50 und 90 °C liegen.

24. Harze nach einem der vorherigen Ansprüche,
**dadurch gekennzeichnet,**
**dass** die OH-Zahlen der Harze zwischen 0 und 200 mg KOH/g liegen.

25. Harze nach einem der vorherigen Ansprüche,
**dadurch gekennzeichnet,**
**dass** die OH-Zahlen der Harze zwischen 0 und 150 KOH/g liegen.

26. Harze nach einem der vorherigen Ansprüche,
**dadurch gekennzeichnet,**
**dass** die OH-Zahlen der Harze zwischen 0 und 100 mg KOH/g liegen.

27. Harze nach einem der vorherigen Ansprüche,
**dadurch gekennzeichnet, dass** die Harze vollständig und klar löslich sind als 10 und 50 %ige Lösung in Ethanol und Testbenzin.

28. Verfahren zur Herstellung von Harzen auf Basis von Ketonen und Aldehyden nach Anspruch 1,
**dadurch gekennzeichnet,**
**dass** die Herstellung in Methanol oder Ethanol als Hilfslösemittel durchgeführt wird und ein Phasentransferkatalysator verwendet wird.

29. Verfahren zur Herstellung von Harzen auf Basis von Ketonen und Aldehyden nach einem der vorhergehenden Ansprüche,
**dadurch gekennzeichnet,**
**dass** als Phasentransferkatalysator Verbindungen der allgemeinen Formel (A) 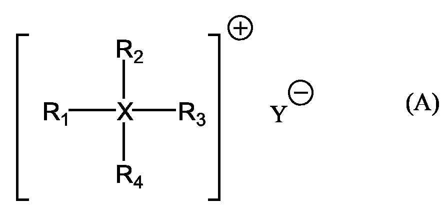 eingesetzt werden, wobei
X ein Stickstoff- oder Phosphoratom,
R₁ Phenyl- oder einen Benzylrest
R₂, R₃, R₄ gleich oder verschieden sein können und einen Alkylrest mit 1 bis 22 C-Atomen in der Kohlenstoffkette und/oder einen Phenyl- und/oder einen Benzylrest
und
Y das Anion einer (an)organischen Säure oder ein Hydroxidion
bedeuten.

30. Verfahren zur Herstellung von Harzen auf Basis von Ketonen und Aldehyden nach einem der vorhergehenden Ansprüche,
**dadurch gekennzeichnet,**
**dass** der Phasentransferkatalysator in Mengen von 0,01 bis 15 Massen-% - bezogen auf das Harz eingesetzt wird.

31. Verwendung der Harze auf Basis von Ketonen und Aldehyden nach einem der vorherigen Ansprüche als Hauptkomponente, Basiskomponente oder Zusatzkomponente in Überzugsmitteln, Druckfarben, Pigmentpasten, Abtönpasten, Kugelschreiberpasten, Tinten, Polituren, Klebstoffen und Dicht- und Dämmstoffen.
